# FASCICULE DE BREVET EUROPEEN

(11) **EP 2 981 199 B1**
(45) Date de publication et mention de la délivrance du brevet: **03.05.2017**
(21) Numéro de dépôt: 14719056.5
(22) Date de dépôt: 31.03.2014
(51) Int. Cl.: A47J 36/26

(54) **APPAREIL ET PROCÉDÉ DE CUISSON D'ALIMENTS À L'ALCOOL**
GARVORRICHTUNG UND VERFAHREN ZUM GAREN EINES GARGUTS MIT ALKOHOL
APPLIANCE AND METHOD FOR COOKING FOOD USING ALCOHOL

(30) Priorité: 03.04.2013 FR 1352997
(43) Date de publication de la demande: 10.02.2016
(73) Titulaire: Cookal, 54320 Maxeville (FR)
(72) Inventeur: PROBST, Laurent, F-94140 Alfortville (FR)
(74) Mandataire: Hege, Frédéric
(86) Numéro de dépôt international: PCT/FR2014/050755
(87) Numéro de publication internationale: WO 2014/162086

(56) Documents cités:
- EP-A1- 0 011 064
- FR-A1- 2 880 250
- NL-A- 7 103 716

## Description

L'invention concerne le domaine de la cuisson d'aliments. Elle concerne plus particulièrement un appareil de cuisson à alcool.

Un tel appareil a fait l'objet d'un brevet d'invention n° FR 2 897 521, qui décrit un appareil de cuisson ou de chauffage d'aliment du type comportant un support sur lequel repose un réservoir apte à recevoir un liquide de combustion, ledit support étant apte à maintenir un récipient à hauteur prédéterminée par rapport au réservoir.

Néanmoins il est difficile de contrôler la cuisson avec le dispositif tel que décrit dans ce document, et la flamme ne chauffe pas le récipient de manière à obtenir une cuisson homogène de l'aliment.

La présente invention se propose de remédier à au moins une partie des inconvénients précités et propose une solution qui permette d'obtenir une cuisson homogène d'un aliment disposé dans un récipient par la combustion d'un alcool disposé dans un réservoir à l'extérieur dudit récipient.

A cet effet, l'invention concerne un réservoir pour un appareil de cuisson ou de chauffage d'aliment du type comportant un réservoir apte à recevoir un liquide de combustion, un récipient destiné à recevoir ledit aliment et un support de maintien desdits réservoir et récipient. Ce réservoir est particulier en ce qu'il comporte un fond et une paroi latérale inclinée rentrante vers le haut.

Grâce à ces dispositions, de l'alcool brûlant dans le réservoir produit une flamme qui sera renvoyée vers le récipient, et permettra ainsi une combustion fiable et répétitive.

Selon d'autres caractéristiques :
- ledit fond peut être incliné, plus haut proche de ladite paroi, et plus bas en s'éloignant de ladite paroi, conférant audit réservoir un volume de confinement adapté pour la combustion,
- ledit réservoir peut présenter une forme de révolution, permettant une régularité de la combustion et une facilité de fabrication du réservoir,
- le diamètre du haut de la zone de paroi peut être inférieur du diamètre du bas de la zone de paroi d'une valeur comprise entre 2 et 10%, en particulier 5%, de la valeur du diamètre du haut de la zone de paroi ; ces valeurs ont été observées comme donnant les meilleurs résultats lors des nombreux essais réalisés,
- ledit réservoir peut comporter en outre une zone d'ouverture disposée au-dessus de ladite zone de paroi, en forme de tronc de cône inversé dont le sommet est dirigé vers le bas, permettant de faciliter le versement d'alcool dans le réservoir,
- le fond peut définir une zone de fond présentant une forme de cône inversé dont le sommet est dirigé vers le bas, et ladite paroi définir une zone de paroi en forme de tronc de cône dont le sommet est dirigé vers le haut ; une telle disposition donne une combinaison de qualité de flamme et de conduite de la flamme vers le récipient particulièrement favorable, permettant une bonne qualité de cuisson,
- la hauteur de la zone de fond peut être plus grande, en particulier deux fois plus grande, que la hauteur de la zone de paroi ; une telle disposition donne de bons résultats,

La présente invention concerne également un appareil de cuisson ou de chauffage d'aliment du type comportant un réservoir selon l'invention, un récipient destiné à recevoir ledit aliment et un support de maintien desdits réservoir et récipient ; un tel appareil de cuisson présente l'avantage de pouvoir être utilisé sur une table à manger, individuellement par chaque client ou convive.

Selon un mode préféré de réalisation de l'invention, ledit récipient peut comporter une base de forme hémisphérique, permettant une bonne stabilité d'appui sur le fond conique du réservoir.

La présente invention concerne enfin un procédé de cuisson d'un aliment à l'aide d'un appareil selon l'invention, et comportant les étapes suivantes :
- on pose le réservoir sur un plan, le cas échéant sur un support de maintien,
- on pose le récipient dans le réservoir de manière à être maintenu par ledit support de maintien, le récipient touchant le fond du réservoir,
- on dispose l'aliment dans ledit récipient,
- on verse une quantité prédéterminée d'alcool dans le réservoir,
- on enflamme l'alcool et on le laisse se consumer.
L'avantage découlant de la présente invention consiste en ce qu'elle permet d'obtenir une cuisson fiable et reproductible, qui peut être effectuée à table, individuellement pour chaque client ou convive, ce qui produit un spectacle original préalable à la dégustation.

D'autres caractéristiques et avantages de l'invention ressortiront de la description détaillée qui va suivre se rapportant à un exemple de réalisation donné à titre indicatif et non limitatif.

La compréhension de cette description sera facilitée en se référant aux dessins joints, dans lesquels :

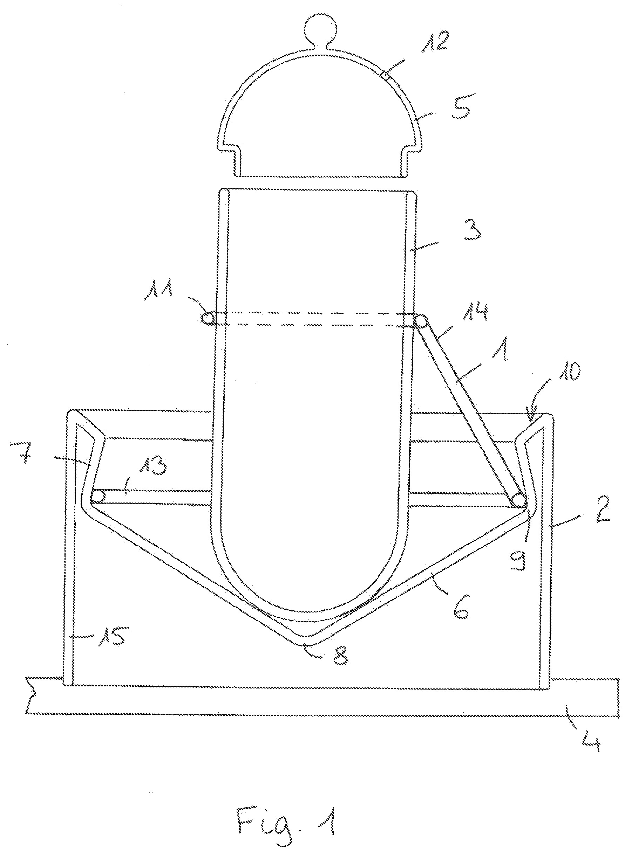

- la figure 1 représente une vue en coupe d'un appareil de cuisson ou de chauffage selon l'invention ;

Tel que représenté à la figure 1 du dessin ci-joint, la présente invention concerne un appareil de cuisson ou de chauffage d'aliments, comportant un support de maintien 1, agencé pour être disposé dans un réservoir 2 et supporter un récipient 3.

Pour faire cuire un aliment, par exemple des oeufs battus, on pose le réservoir 2 sur une base, par exemple une table, ou une tablette 4 spécialement conçue pour l'invention, avec un emplacement pour le réservoir 2, un emplacement pour une petite cuillère, et un emplacement pour un couvercle 5 du récipient 3 ces deux derniers emplacements n'étant pas représentés sur la fig. 1. Le support de maintien 1 est ensuite posé dans le réservoir 2, à l'emplacement prévu à cet effet. Enfin le récipient 3 est posé sur le fond 6 du réservoir 2 de sorte à être maintenu par le support de maintien 1. L'aliment est alors introduit dans le récipient 3, une quantité prédéterminée d'alcool est versée dans le réservoir 2 autour du récipient 3, puis enflammé. La cuisson de l'aliment se fait pendant la combustion de l'alcool. Lorsque l'alcool est complètement consumé, l'aliment est prêt à être servi, soit directement dans le récipient 3, soit après transvasement sur une assiette.

Pour obtenir une bonne combustion de l'alcool, selon l'invention, il est nécessaire de donner une forme adaptée à l'invention. La fig. 1 illustre un exemple de réalisation d'un tel réservoir 2, de forme circulaire, et vu selon une coupe effectuée selon un diamètre.

Selon l'invention la paroi latérale 7 est inclinée rentrante. Le terme « rentrante » signifie dans le cas d'un réservoir 2 circulaire, que le diamètre intérieur à l'extrémité inférieure de la paroi latérale 7 est supérieur à celui à l'extrémité supérieure de cette paroi latérale 7.

Dans le cas d'une forme quelconque, le terme « rentrante » doit être interprété que selon au moins une coupe verticale du réservoir 2, les parois sont plus éloignées à l'extrémité inférieure de la paroi latérale 7 qu'à l'extrémité supérieure de cette paroi latérale 7.

Une telle paroi latérale 7 rentrante oblige la flamme formée par la combustion de l'alcool à revenir vers le récipient 3 en montant, ce qui produit une cuisson plus homogène de l'aliment contenu dans le récipient 3.

Le réservoir 2 de la fig. 1 présente la caractéristique supplémentaire que son fond 6 est également incliné vers le bas en son centre 8, de sorte que son centre 8 est situé plus bas que son pourtour 9. Ceci présente l'avantage supplémentaire que l'alcool est regroupé proche du récipient 3, alors que si le fond 6 était plat et horizontal, l'alcool serait étalé sur toute la surface du fond 6. Par un fond 6 incliné on obtient ainsi une meilleure flamme.

Dans l'exemple représenté, l'inclinaison du fond 6 se fait sous la forme d'un cône, ce qui se traduit sur la coupe par une ligne droite, incliné d'environ 30° par rapport à l'horizontale. Cela se traduit pour un diamètre en haut de la paroi latérale 7 de 110mm, par une profondeur du fond 6 d'environ 30mm. La paroi latérale 7 présente sur l'exemple représenté une hauteur d'environ 20mm, et elle se prolonge à son sommet par une zone d'ouverture 10 d'environ 10mm de hauteur, où la paroi latérale 7 s'incline dans l'autre sens d'environ 45°. Cette zone d'ouverture 10 présente l'avantage de faciliter le versement de l'alcool dans le réservoir 2.

Le réservoir 2 peut être complété par un fût externe 15, permettant de le poser de manière stable sur une table ou une tablette 4 prévue à cet effet.

Le récipient 3 comporte de préférence une partie cylindrique verticale allongée, par exemple de hauteur environ 100mm, et de diamètre environ 50mm. Sa base est arrondie, par exemple selon un rayon d'environ 25mm, de sorte à former une demi-sphère. Un tel arrondi donne une meilleure stabilité au récipient 3 posé sur le fond 6 du réservoir 2 qu'une base plate, qui ne nécessite de la part du support de maintien 1 qu'un maintien unique par un arceau 11 du support de maintien 1 à environ 25mm du haut du récipient 3. Par ailleurs l'arrondi à la base du récipient 3 est relativement facile à produire. Par ailleurs la part d'alcool susceptible d'être piégée entre le fond 6 du réservoir 2 et la base du récipient 3 est négligeable, et ne justifie pas une adaptation plus précise des formes, qui serait coûteuse.

Le récipient 3 est de préférence transparent, permettant l'observation du processus de cuisson de l'aliment. Il peut être en un verre de faible coefficient de dilatation, par exemple de type borosilicate comme du verre connu sous la marque pyrex, de sorte à bien supporter les changements de température occasionnés par la cuisson.

Le récipient 3 peut être complété par un couvercle 5 amovible, de préférence également transparent, par exemple en un verre de type borosilicate également. On peut prévoir un petit trou 12 dans le couvercle 5, de diamètre 2 à 3mm, pour permettre l'échappement d'air ou de vapeur quand on souhaite réaliser la cuisson avec le couvercle 5.

Le support de maintien 1 peut par exemple consister en ledit arceau 11, destiné à entourer le récipient 3 dans une zone située dans sa moitié supérieure, un anneau 13 destiné à se loger sur le fond 6 du réservoir 2, et une tige de liaison 14 reliant de façon rigide l'arceau 11 à l'anneau 13. De préférence, l'anneau 13 sera agencé pour se loger proche de la paroi latérale 7, pour assurer la stabilité du support de maintien 1. On pourra prévoir que l'anneau 13 ne constitue pas un cercle complet, pour lui permettre de s'introduire par l'ouverture formée par l'extrémité supérieure de la paroi latérale 7.

Selon un autre mode de réalisation, le fond 6 et la paroi latérale 7 peuvent être formés ensemble par une forme sphérique coupée légèrement au-dessus de la moitié d'une sphère, de sorte que le fond 6 constitue la partie basse de la sphère, et les parois latérales la partie dépassant la moitié de la sphère dans laquelle partie le diamètre se rétrécit. Ce mode de réalisation entre également dans le cadre de l'invention, même s'il n'y a pas de discontinuité entre le fond 6 et la paroi latérale 7. Il sera néanmoins opportun de prévoir une forme spécifique en bas du fond 6, pour assurer la stabilité du récipient 3, ainsi qu'un appui pour le support de maintien 1.

Selon un autre mode de réalisation, le support de maintien 1 peut être agencé pour supporter à la fois le réservoir 2 et le récipient 3 d'une manière qui permette au récipient 3 d'être posé sur le fond 6 du réservoir 2.

L'avantage de la présente invention réside en particulier en ce que l'appareil de cuisson permet une cuisson fiable et répétitive d'un aliment par une petite quantité d'alcool, et de manière à rendre le processus de cuisson visible pour le client ou le convive.

Bien que l'invention ait été décrite à propos d'une forme de réalisation particulière, il est bien entendu qu'elle n'y est nullement limitée et qu'on peut y apporter diverses modifications de formes, de matériaux et de combinaisons de ces divers éléments sans pour cela s'éloigner du cadre de l'invention.

## Revendications

1. Appareil de cuisson ou de chauffage d'aliment comportant un réservoir (2) apte à recevoir un liquide de combustion, un récipient (3) destiné à recevoir ledit aliment et un support de maintien (1) dudit récipient (3), **caractérisé en ce que** ledit réservoir (2) comporte un fond (6) et une paroi latérale (7) inclinée rentrante vers le haut.

2. Appareil selon la revendication précédente, dans lequel ledit fond (6) est incliné, plus haut proche de ladite paroi latérale, et plus bas en s'éloignant de ladite paroi latérale.

3. Appareil selon l'une des revendications précédentes, dans lequel ledit réservoir (2) présente une forme de révolution.

4. Appareil selon la revendication précédente, dans lequel le diamètre du haut de la paroi latérale est inférieur du diamètre du bas de la paroi latérale d'une valeur comprise entre 2 et 10%, en particulier 5%, de la valeur du diamètre du haut de la paroi latérale.

5. Appareil selon l'une des revendications 3 à 4, dans lequel ledit réservoir comporte en outre une zone d'ouverture (10) disposée au-dessus de ladite paroi latérale, en forme de tronc de cône inversé dont le sommet est dirigé vers le bas.

6. Appareil selon l'une des revendications 3 à 5, dans lequel le fond (6) définit une zone de fond présentant une forme de cône inversé dont le sommet est dirigé vers le bas, et ladite paroi latérale définit une zone de paroi en forme de tronc de cône dont le sommet est dirigé vers le haut.

7. Appareil selon la revendication précédente, dans lequel la hauteur de la zone de fond est plus grande, en particulier deux fois plus grande, que la hauteur de la zone de paroi.

8. Appareil selon l'une des revendications précédentes, dans lequel ledit récipient (3) comporte une base de forme hémisphérique.

9. Procédé de cuisson d'un aliment à l'aide d'un appareil selon l'une des revendications précédentes, et comportant les étapes suivantes :
- on pose le réservoir (2) sur un plan,
- on pose le récipient (3) dans le réservoir (2) de manière à être maintenu par un support de maintien (1), le récipient (3) touchant le fond (6) du réservoir (2),
- on dispose l'aliment dans ledit récipient (3),
- on verse une quantité prédéterminée d'alcool dans le réservoir (2),
- on enflamme l'alcool et on le laisse se consumer.

## Patentansprüche

1. Vorrichtung zum Kochen oder Erhitzen von Lebensmittel, umfassend einen Tank (2), der geeignet ist, ein Verbrennungsfluid aufzunehmen, einen Behälter (3) um das Nahrungsmittel zu empfangen und eine Haltestütze (1) des Behälters (3), **dadurch gekennzeichnet, dass** der Tank (2) einen Boden (6) und eine schräg nach oben einspringende Seitenwand (7) aufweist.

2. Vorrichtung nach dem vorhergehenden Anspruch, wobei der Boden (6) geneigt ist, höher in der Nähe der Seitenwand und tiefer entfernt von der Seitenwand.

3. Vorrichtung nach einem der vorhergehenden Ansprüche, wobei der Tank (2) eine Rotationsform hat.

4. Vorrichtung nach dem vorhergehenden Anspruch, wobei der Durchmesser am oberen Ende der Seitenwand kleiner ist als der Durchmesser am unteren Ende der Seitenwand um einen Wert zwischen 2 und 10%, insbesondere 5%, des Durchmessers am oberen Ende der Seitenwand.

5. Vorrichtung nach einem der Ansprüche 3 bis 4, wobei der Tank ferner einen Öffnungsbereich (10) aufweist, oberhalb der Seitenwand, in der form eines umgekehrten Kegelstumpfes, dessen Spitze nach unten ist.

6. Vorrichtung nach einem der Ansprüche 3 bis 5, wobei der Boden (6) einen Bodenbereich definiert, mit einer Form eines umgekehrten Kegels, dessen Spitze nach unten gerichtet ist, und die Seitenwand definiert einen Wandbereich, mit einer Form eines Kegelstumpfes, dessen Spitze nach oben gerichtet ist.

7. Vorrichtung nach dem vorhergehenden Anspruch, wobei die Höhe des Bodenbereichs größer, insbesondere doppelt so groß ist, als die Höhe des Wandbereichs.

8. Vorrichtung nach einem der vorhergehenden Ansprüche, wobei der Behälter (3) eine halbkugelförmige Basis aufweist.

9. Verfahren zum kochen eines Nahrungsmittels unter Verwendung einer Vorrichtung nach einem der vorhergehenden Ansprüche, und umfassend die folgenden Schritte:
- man platziert den Tank (2) auf eine Ebene,
- man platziert den Behälter (3) in den Tank (2), gehalten durch einen Halteträger (1), wobei der Behälter (3) den Boden (6) des Tanks (2) berührt,
- man füllt das Nahrungsmittel in den Behälter (3),
- man gießt eine vorbestimmte Menge Alkohol in den Tank (2),
- man zündet das Alkohol an, und lässt es brennen.

## Claims

1. Food cooking or heating appliance comprising a tank (2) able to hold a combustion liquid, a container (3) able to keep said food and a support (1) of said container (3) in position, **characterized in that** said tank (2) comprises a base (6) and sidewall (7) inwardly inclined towards the top.

2. Appliance according to the previous claim, wherein said base (6) is inclined, higher near said sidewall and lower apart from said sidewall.

3. Appliance according to one of the previous claims, wherein said tank (2) presents a revolution shape.

4. Appliance according to the previous claim, wherein the diameter of the top of the sidewall is less than the diameter of the bottom of the sidewall by a value comprised between 2 and 10%, in particular 5%, of the value of the diameter of the top of the sidewall.

5. Appliance according to one of the claims 3 to 4, wherein said tank further comprises an opening zone (10) placed above said sidewall in the form of an inverted truncated cone, the top of which is facing downwards.

6. Appliance according to one of the claims 3 to 5, wherein the base (6) defines a base zone that presents an inverted cone shape, the top of which faces downwards and said sidewall defines a wall zone in the form of a truncated cone, the top of which faces upwards.

7. Appliance according to the previous claim, wherein the height of the base zone is greater, in particular two times greater, than the height of the wall zone.

8. Appliance according to one of the previous claims, wherein said container (3) comprises a base in the shape of a hemisphere.

9. Method for cooking food by using an appliance according to one of the previous claims and comprising the following steps:
- the tank (2) is placed on a flat surface,
- the container (3) is placed in the tank (2) so as to be held by a said support (1), the container (3) touching the base (6) of the tank (2),
- the food is placed in said container (3),
- a predetermined quantity of alcohol is poured into the tank (2),
- - the alcohol is lit and left to burn.
